# EUROPÄISCHE PATENTSCHRIFT

(11) **EP 0 815 624 B1**
(45) Veröffentlichungstag und Bekanntmachung des Hinweises auf die Patenterteilung: **26.05.1999**
(21) Anmeldenummer: 96906694.3
(22) Anmeldetag: 22.03.1996
(51) Int. Cl.: H02G 1/14, H02G 15/18

(54) **VERFAHREN UND VORRICHTUNG ZUM AUFSCHIEBEN UND POSITIONIEREN VON HÜLSENFÖRMIGEN, ELASTISCHEN KABELMUFFEN AUF KABELVERBINDUNGEN**
METHOD AND DEVICE FOR SLIDING AND POSITIONING RESILIENT TUBULAR CABLE SLEEVES ON CABLE JOINTS
PROCEDE ET DISPOSITIF PERMETTANT DE FAIRE GLISSER ET DE POSITIONNER DES MANCHONSELASTIQUES TUBULAIRES SUR DES RACCORDS DE CABLE

(30) Priorität: 23.03.1995 DE 19510598
(43) Veröffentlichungstag der Anmeldung: 07.01.1998
(73) Patentinhaber: Zittauer Kunststoff GmbH, 02763 Zittau (DE)
(72) Erfinder: PILLING, Jürgen, D-02794 Spitzkunnersdorf (DE); HAIM, Klaus-Dieter, D-02763 Zittau (DE); WEICHOLD, Jens, D-02763 Zittau (DE); ROTZSCHE, Ralf, D-01445 Radebeul (DE)
(74) Vertreter: Allgeier, Kurt
(86) Internationale Anmeldenummer: DE9600490
(87) Internationale Veröffentlichungsnummer: WO9629767

(56) Entgegenhaltungen:
- WO-A-89/00782
- DE-B- 1 073 568
- DE-C- 474 991
- FR-A- 2 685 564
- US-A- 3 275 490
- US-A- 3 946 480

## Beschreibung

Die Erfindung betrifft ein Verfahren und eine Vorrichtung zum Aufschieben und Positionieren von hülsenförmigen, elastischen, radial dehnbaren Kabelmuffen auf Kabelverbindungen als Grundkörper, deren kleinster abzudeckender bzw. zu umschliessender Aussendurchmesser grösser ist als der ungedehnte Innendurchmesser der aufzuschiebenden, hülsenförmigen Kabelmuffe; vorzugsweise betrifft die Erfindung die Aufgabe, radial dehnbare hülsenförmige Kabelmuffen auf Kabelverbindungen, diese als Grundkörper dichtend umschliessend aufzuschieben, welche aus isolierten, in an sich in bekannter Weise entsprechend vorbereiteten Kabeladern oder Kabeladerbündeln bestehen.

Ein wesentliches Anwendungsgebiet der Erfindung ist das Aufschieben und Positionieren von Kabelmuffen von Kabelgarnituren auf in an sich bekannter Weise für das Herstellen von isolierten Kabelverbindungen von Ein- und Dreileiter-Kunststoff-Kabeln mit Nennspannungen bis etwa 30 kV vorbereiteten Kabelenden oder Kabelverbindungen als Grundkörper.

Bei diesen Anwendungen des Verfahrens in der Kabelverbindungs- und Kabelisoliertechnik bestehen die vorzugsweise benutzten, an sich bekannten dehnbaren hülsenförmigen Kabelmuffen beispielsweise aus Silikongummi oder EPDM, die je nach Anwendungsfall mit Füllstoffen modifiziert sein können, um z.B. eine Feldsteuerung zu erreichen oder die Kriechstromfestigkeit zu erhöhen. Sie können insbesondere auch aus mehreren elastischen Schichten, z.B. mit unterschiedlicher Leitfähigkeit und/oder Dielektrizitätskonstanten aufgebaut sein. Sie dienen zur Herstellung einer Kabelgarnitur, d.h. einer Isolierung an den Enden eines Kabels im Zusammenhang mit Kabelendverschlüssen, Kabelsteckern, als Kabelendkappe oder zur Isolierung an der Verbindungsstelle zweier Kabelenden als Kabelmuffe, sind also Teil eines Kabelgarnitursets.

Der zu umschliessende Grundkörper der Kabelverbindung ist in diesen Fällen eine isolierte Kabelader oder ein isoliertes Kabeladerbündel, vorzugsweise von Kunststoffkabeln mit Polyäthylen-Isolierung, deren äussere Umhüllungen einschliesslich der sogenannten äusseren Leiterschicht entfernt sind, wie es bei der Montage von Kabelgarnituren üblich ist. Erforderlichenfalls wird die Isolierschicht des Kabels vor dem Aufschieben und Positionieren der elastischdehnbaren hülsenförmigen Kabelmuffe noch mit einer Hüllschicht versehen, die z.B. bei Papiermasse-Kabeln eine Sperre gegen den Austritt der Kabelmasse bildet.

Bei der bekannten Arbeitsweise zum Aufschieben und zum Positionieren der hülsenförmigen Bauteile auf die in üblicher Weise vorbereiteten Kabelenden, z.B. über einer fertiggestellten Kabelverbindung, wird in der Regel das Bauteil von Hand und über die Kabelverbindungs- oder Endstelle gezogen, was einen hohen Kraftaufwand erfordert. Um eine zuverlässig abgedichtete Kabelverbindung samt den beiderseitigen Kabelenden bzw. den Bereichen der Kabel-Austrittstellen aus der Kabelmuffe sicherzustellen, muss der Innendurchmesser des hülsenförmigen Bauteils im entspannten Zustand um ein ausreichendes Mass kleiner sein als der kleinste zu umschliessende Aussendurchmesser der Kabelverbindug bzw. des Kabelendes.

Die Schwierigkeit besteht darin, dass die vorbereiteten Kabeladerverbindungen bzw. Leiterquerschnitte in ziemlich weiten Grenzen grosse Dicken- bzw. Aussendurchmesser-Unterschiede aufweisen. Um eine dichte Umschliessung mittels einer ausreichenden Schrumpfspannung auch bei den dünnsten Stellen an den Enden der Kabeladerverbindung bzw. des Leiterquerschnitts zu gewährleisten, muss die ausgewählte Grösse der hülsenförmigen Kabelmuffe eine ausreichende Umschliessungskraft in entspanntem Zustand auch noch in diesen dünnen Bereichen entfalten. Da diese vorbereiteten Kabelmuffen in abgestuften Dimensionsgrössen verfügbar sind, kommt es vor, dass ein solches Bauteil auch in gedehntem Zustand nicht weit genug ist, um ohne weiteres der vorbereiteten Kabelverbindung übergestülpt zu werden; in diesen Fällen erfordert die übliche manuelle Arbeitsweise eine erhebliche Kraftanstrengung des Monteurs, und zwar um so mehr, grösser die erforderlicher Dehnung der Kabelmuffe ist.

Der erforderliche Kraftaufwand wird auch vom Material der gegeneinander zu verschiebenden Teile bestimmt. Bei der Kabelverbindungstechnik muss die aus Silikongummi oder EPDM bestehende Kabelmuffe auf der aus Polyäthylen bestehenden Kabelisolierung verschoben werden, was deshalb oft schwierig ist, weil Silikon auf Polyäthylen "klebt".

Aus der DE 37 15 915 A1 und der DE 30 01 158 A1 ist es bekannt, dass die Kabelmuffe vor der Montage auf eine relativ starre oder etwas plastisch verformbare zylindrische Stützvorrichtung aufzuziehen, die dann gemeinsam mit der Kabelmuffe auf die für die Montage vorbereitete Kabelverbindung mit radialer Distanz aufgeschoben wird. Nach der Positionierung wird die Stützvorrichtung, z.B. eine Stützwendel oder eine ein- oder mehrteilige Stützhülse entfernt. Nachteilig erscheint dabei der hohe Material- und Kostenaufwand für die Stützvorrichtung und die hohe und auch lange, nämlich über die gesamte Lagerzeit andauernde Dehnung der Kabelmuffe. Durch die Dehnung um teilweise über 300 % kann es während dieser Lagerzeit zu Rissbildungen und zu Materialermüdung kommen, so dass eine zuverlässige Isolier- und Dichtwirkung nicht mehr gegeben ist. Da in der Praxis Lagerzeiten von bis zu 3 Jahren vorkommen, verringert sich der nach der Entspannug noch verbleibende restliche Anpressdruck auf die Kabel- und Adernisolierung Infolge der unvermeidlichen Materialermüdung. So kann es wegen mangelhafter Isolierung Im praktischen Einsatz zu Tellentladungen zwischen der Kabel- oder Adernisolierung und der Innenoberfläche des hülsenförmigen Isolier-Bauteils der Kabelgarnitur kommen, was aus Gründen der Betriebssicherheit ausgeschlossen werden muss.

In der WO 89/00782 Al ist zum leichteren Aufschieben auf die Kabelverbindung vorgeschlagen worden, in der Kabelmuffe ein Bündel Gleitstrelfen parallel zueinander anzuordnen, deren Schmalseiten mit Je einer längslaufenden Formprofilierung versehen sind, welche sich beim überziehen der Kabelmuffe formschlüssig ineinandergreifend zu einem geschlossenen ringzylindrischen und mantelähnlichen Gebilde zusammenfügen. Nachteilig erscheint dabei, dass durch die Anzahl und Dimensionierung der Gleitstrelfen der Durchmesser der mantelähnllchen Kabelmuffe bestimmt wird, welche sich dann den Durchmesserunterschieden der Kabelbindung, z.B. bei kleineren Durchmessern nur dadurch anpassen kann, dass sich diese Streifen in unerwünschter Welse überlappen.

Auf Grund dieser Gegebenheiten liegt der Erfindung die Aufgabe zugrunde, eine Verfahrensweise und eine Vorrichtung zu deren Durchführung anzugeben, durch welche diese bekannten Probleme beim Aufschieben und Positionieren der Kabelmuffe aus einem hochelastischen Werkstoff auf eine Kabelverbindung als zylindrischer oder konischer Grundkörper, deren zu umschliessender Aussendurchmesser grösser ist als der Innendurchmesser dieser Kabelmuffe in entspanntem Zustand In der im Patentanspruch 1 angegebenen Welse überwunden werden.

Das Verfahren kann in der Weise durchgeführt werden, dass die freien Enden der Gleitzungen umfangsverteilt In den Hohlraum der Kabelmuffe an der Wandung anliegend und an den Ende frei herausragend eingesetzt werden, bevor diese über mit den aufgespreizten, die Kabelverbindung allseitig umfangsvertellt umgebenden Gleitzungen auf diesen gleitend bis zur Endpositlonlerung aufgeschoben wird, und dass darauf die Gleltzungen In Aufschieberichtung durch Herausziehen entfernt werden.

Nach einem weiteren Merkmal können die Gleitzungen an wenigstens einer Stelle ihrer Längserstreckung zumindest während des Aufschiebens mittels wenigstens einer Querlasche in ihrer gegenseitigen Beabstandung fixiert werden. Ausserdem können erfIndungsgemäss die Gleitzungen an einem Ende ihrer Längserstreckung zumindest während des Aufschlebens mittels einer Querlasche verbunden und In Ihrer gegenseitigen Beabstandung fixiert werden.

Ebenfalls nachgiebige, schmale und langgestreckte Zungen oder Stäbe werden nach einem Vorschlag der US.A 3,275,490 bei der Herstellung eines sog. Anstrelchrollers zum Aufziehen eines Überzugs eines zylindrischen, mit Noppen versehenen Gebildes unter Vorspannung auf einen Grundkörper benutzt, wobei mittels des Glelteffekts der Zungen ein hochwirksames Klebemittel zur Befestigung eingebracht wird.

Vorzugsweise zum Einfädeln für die Kabelbäume von Kraftfahrzeugen oder anderen Fahrzeugen z.B. auch Flugzeugen wird in der FR-A-2 685 564 vorgeschlagen, ein Kabelbündel mittels eines Verbinders an einem Schiffchen zu verankern, welches an vier an einem Support befestigten parallelen Führungsstäben geführt verschiebbar und In den in der Gegenrichtung ebenfalls auf den Führungsstäben beweglichen Halter bzw. Überzug einziehbar Ist.

Diese bekannten Arbeitsweisen konnten Jedoch nicht als Vorbildhinweise für den erfindungsgemässen Vorschlag dienen, und die dort gezeigten Vorrichtungen weisen ebenfalls nicht auf die nachstehend beschriebene erfindungsgemässe Vorrichtung zum Aufschieben und Positionieren von hülsenförmigen elastischen Kabelmuffen auf vorbereitete Kabelverbindungen als zylindrische oder konische Grundkörper hin, bei denen der Aussendurchmesser grösser ist als der Innendurchmesser der radial aufdehnbaren Kabelmuffen aus einem hochelastischen Werkstoff in entspanntem Zustand, mit welcher das vorstehend beschriebene Verfahren vorteilhaft ausgeführt werden kann. Hierzu wird erfindungsgemäss eine gemäss Patentanspruch 5 ausgebildete Vorrichtung vorgeschlagen.

Diese Gleltzungen weisen erfindungsgemäss vorzugsweise eine Brelte zwischen 3 und 15 mm und eine Dicke zwischen 0,1 und 4 mm auf, ihre freien Enden können abgerundet sein.

Nach einem weiteren Merkmal kann die den Distanz- oder Teilrlngbund bildende Querlasche einen geschlossenen Ring bilden, dessen Innendurchmesser grösser ist als der Jewells grösste Aussendurchmesser des zu umschliesenden Grundkörpers. Dabel ist erfindungsgemäss vorgesehen, dass sich die Gleltzungen in koaxialem Verlauf zur Mlttelachse des geschlossenen Ringes erstrecken oder in diesen Verlauf abwinkeln lassen, und zwar In nur einer oder in beiden Richtungen.

Nach weiteren Merkmalen können die Enden der Gleitzungen mit einer zweiten Querlasche oder einem zweiten geschlossenen Ring verbunden sein.

Ferner können nach einem weiteren Vorschlag die Gleitzungen im Anschlussbereich zu einer jeweiligen Querlasche mit je einer Schwächungsnut versehen sein, und/oder sie können auf etwa halber Länge zwischen der ersten und zweiten Querlasche bzw. dem jeweiligen geschlossenen Ring eine Sollbruchstelle aufweisen.

Die Gleitzungen und deren Querlaschen sind im Spritzgiessverfahren aus einem thermoplastischen Kunststoff, vorzugsweise Polyäthylen oder Polypropylen herstellbar. Ferner können diese aus einem plattenförmigen oder extrudierten bandförmigen Kunststoffmaterial, vorzugsweise Polyäthylen oder Polypropylen bestehen, und durch mechanische Bearbeitung, insbesondere durch Stanzen oder Schneiden hergestellt sein.

Durch die Anwendung der Aufschiebehülse mit den vorgenannten Merkmalen hat zahlreiche Vorteile. Sie erleichtert das Aufschieben der elastischen hülsenförmigen Baukörper ganz erheblich, und es werden dabei Beschädigungen, vor allem auch Überdehnungen vermieden. Das neue Hilfsmittel ist über einen weiten Durchmesserbereich anwendbar und kann auch in der Regel mehrfach wiederverwendet werden.

Mit den auf der den Grundkörper bildenden Kabelverbindung gut gleitenden Laschen der erfindungsgemässen Aufschiebehülse lassen sich hülsenförmige Kabelmuffen aus Silikongummi oder einem anderen schlecht rutschenden Material, die ausserdem einen in Bezug auf den Aussendurchmesser des Grundkörpers geringeren Innendurchmesser haben, ohne grossen Kraftaufwand und mit der erforderlichen Dehnung auf den Grundkörper aufziehen und beliebig positionieren. Auch kleinere Stufen und Kanten lassen sich so ohne weiteres geschmeidig überwinden und es besteht nicht die Gefahr, dass die Innenfläche der Kabelmuffen beschädigt werden könnte.

Die hülsenförmigen Kabelmuffen werden erst unmittelbar bevor sie aufgezogen werden sollen, auf die Laschen aufgeschoben und erst beim eigentlichen Aufziehvorgang im erforderlichen Masse radial gedehnt. Demzufolge können auch keine Materialschäden durch Überdehnung mehr auftreten; andererseits können auch grosse Dehnungsbereiche, etwa bis zu 70 % erforderlicher Dehnung, ohne weiteres erzielt werden. Die Muffen müssen nicht mehr in vorgedehntem Zustand über längere Zeit gelagert werden, so dass auch eine Materialermüdung nicht mehr eintreten kann und ein eventueller Rückformungsrest entfällt.

Sobald die Gleitzungen der Aufschiebehülse herausgezogen werden, schrumpft das hülsenförmige Bauteil wie gewünscht auf der positionierten Stelle des Grundkörpers auf und kann ihn dichtend umschliessen.

Die Summe der Breite der einzelnen Gleitzungen ist vorzugsweise kleiner dem Umfang der den Grundkörper bildenden Kabelverbindung mit dem kleinsten zu bearbeitenden Querschnitt. So können die Gleitzungen beim Aufziehen auch im kleinsten vorgesehenen Anwendungsbereich nebeneinander flachliegen, und das Gleiten wird in keiner Weise behindert.

Sollte eine sehr kleine Muffe bei sehr geringen Querschnitten von Kabelteilen angewendet werden, so besteht die Möglichkeit, eine oder mehrere der Gleitzungen ausserhalb der Muffe zu belassen, also nicht einzuführen und so die Anzahl der wirksamen Laschen zu verringern. Die erfindungsgemässe Aufschiehehülse lässt sich also an ganz unterschiedliche Grössenverhältnisse anpassen.

Ausführungsbeispiele der Erfindung mit ihren Besonderheiten und Merkmalen sind in der Zeichnung dargestellt, die im folgenden näher erläutert ist. Es zeigen
- Fig. 1a: die perspektivische Darstellung einer ersten Ausführungsform der erfindungsgemässen Aufschiebehülse;
- Fig. 1b: in perspektivischer Darstellung die Verfahrensweise zum Aufschieben einer Kabelmuffe auf einen Grundkörper unter Anwendung der Aufschiebehülse gemäss Fig. la;
- Fig. 2: eine abgewandelte zweite Ausführungsform der erfindunggemässen Aufschiebehülse, hergestellt aus plattenförmigem Material;
- Fig. 3: eine Weiterbildung der Ausführungsform gemäss Fig. 2;
- Fig. 4: zeigt eine weitere Ausführungsform der erfindungsgemässen Aufschiebehülse.

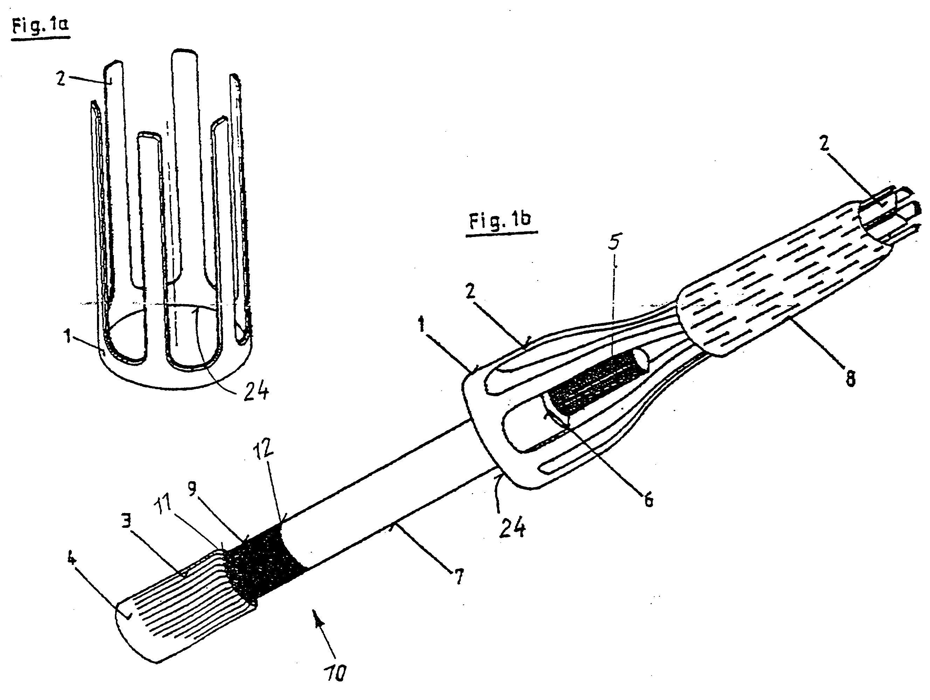

Wie aus Fig. 1a ersichtlich ist, besteht die erfindungsgemässe Aufschiebehülse aus einer als ringförmiger Distanz- oder Teilringbund 24 ausgebildeten Querlasche 1, mit der in gleichmässigen Abständen mehrere langgestreckte, dünne, biegsame und laschenartige Gleitzungen 2 verbunden, vorzugsweise angeformt sind, die sich in koaxialem Verlauf zur Mittelachse dieses geschlossenen Ringes erstrecken. Die freien Enden dieser Gleitzungen 2 sind vorteilhafterweise abgerundet.

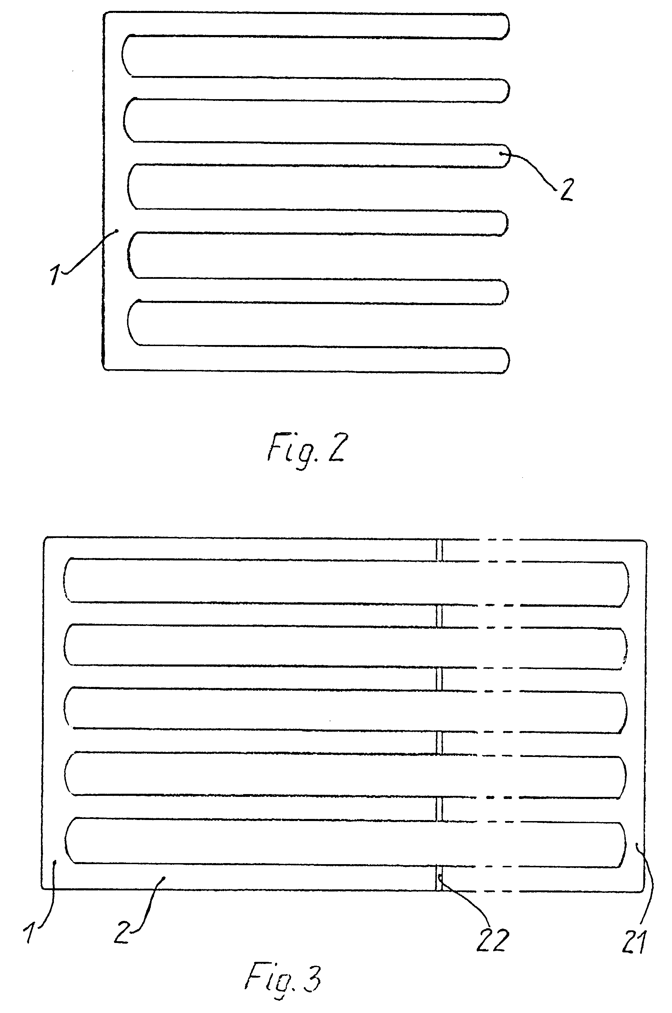

Der Innendurchmesser des geschlossenen Ringes 24 ist so dimensioniert, dass er mit geringem Abstand, beispielsweise mit mindestens 3 mm, über den mit dem hülsenförmigen Bauteil 8 (siehe dazu Fig. la) zu umschliessenden Durchmesser eines Grundkörpers 10 passt. Die seitlichen Abstände zwischen den Gleitzungen 2 sind so bemessen, dass sie sich, wenn sie als Bündel gemäss Fig. 2 in ein in entspanntem Zustand befindliches, hülsenförmiges Bauteil 8 mit dem geringsten vorkommenden Durchmesser eingefügt und mit diesem danach auf einen Grundkörper 10 mit dem kleinsten Durchmesser aufgeschoben werden, ohne sich zu überlappen, zwischen der Innenumfangsfläche des hülsenförmigen Bauteils 8 und der Aussenumfangsfläche des Grundkörpers 10 eingefügt sind.

Die Aufschiebehülse kann in abgestuften Grössen und mit entsprechend unterschiedlicher Zahl und Breite sowie Dicke und Länge der Gleitzungen 2 vorgehalten werden, so dass auch bei einem Grundkörper 10 mit dem grössten vorkommenden Querschnitt die Verfahrensweise angewendet werden kann, auch wenn das hülsenförmige Bauteil 8 möglicherweise besonders stark gedehnt werden muss. Die Innenfläche des hülsenförmigen Bauteils 8 kann zwischen den Gleitzungen 2 auf der Oberfläche des Grundkörpers 10 nicht zur berührenden Anlage kommen, wenn eine ausreichende Anzahl von ausreichend breiten Gleitzungen 2 der Aufschiebehülse gewählt wird. Die erforderliche Länge der Gleitzungen 2 ist deutlich länger zu wählen als die grösste Länge der aufzuschiebenden hülsenförmigen Bauteile 8. Dabei kann ein solches hülsenförmiges Bauteil 8 bedarfsweise bis auf seine volle Länge oder auch nur bis auf eine Teillänge aufgeschoben werden.

Die erfindungsgemässe Aufschiebehülse 1 ist vorzugsweise in Spritzgiesstechnik aus einem thermoplastischen Kunststoff, z.B. Polyäthylen oder Polypropylen einstückig hergestellt; der Kunststoff soll in Bezug auf das Material des Grundkörpers eine gute Gleitfähigkeit aufweisen.

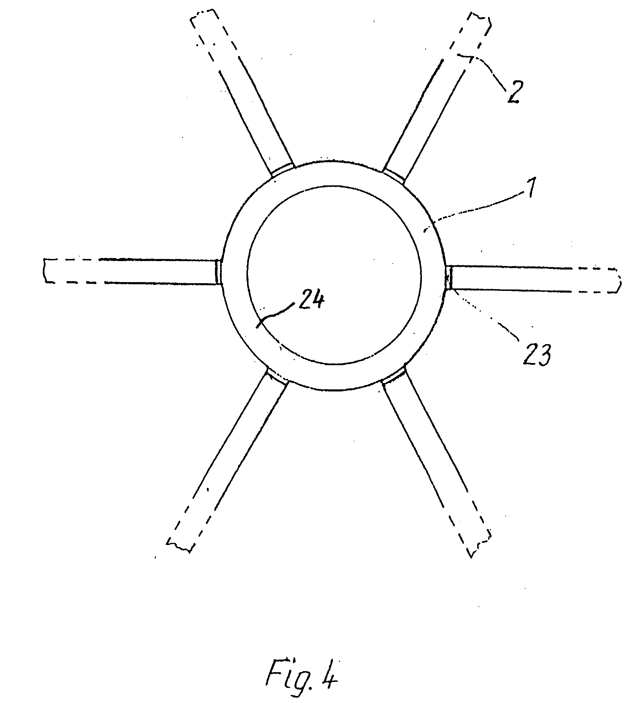

Die Aufschiebehülse 1 kann auch durch mechanische Bearbeitung aus einem plattenförmigen oder als Band extrudierten Werkstoff, z.B. und Ausstanzen oder Schneiden hergestellt sein. Die Gleitzungen 2 können z.B. gemäss Fig. 4 zunächst in radialen Richtungen von der einen geschlossenen Ring 24 bildenden Querlasche 1 sternförmig abragen; sie werden vor der bestimmungsgemässen Anwendung der Aufschiebehülse um 90° in koaxiale Richtung umgebogen, damit sie mit ihren freien Enden in das hülsenförmige Bauteil 8 eingeschoben werden können. Dieses in diesem speziellen Fall notwendige Umlegen der Laschen 2 kann erleichtert werden, indem im Übergangsbereich zwischen Distanzbund 1 und den Laschen 2 eine Schwächungsnut 23 vorgesehen wird.

Wird die Aufschiebehilfe aus einem plattenförmigen Werkstück gestanzt, so ist es möglich, gemäss Fig. 2 die Querlasche 1 nicht ringförmig sondern eben auszubilden; die Gleitzungen 2 verlaufen dann rechtwinklig zur Querlasche 1; bei ihrer Anwendung wird dann das ebene Gebilde ringförmig zu der Aufschiebehülse geformt.

Wie erwähnt, ist aus Fig.1 die Aufschiebehülse 1 bei der Durchführung des erfindunsgemässen Verfahrens ersichtlich. Der Grundkörper 10 schematisch und beispielhaft als Kabelverbindung oder als Kabelabschluss vorbereitete Endes eines kunststoffisolierten Mittelspannungs-Energiekabels dargestellt. Das frei gelegte Ende des elektrischen Leiters ist mit 5 bezeichnet und die bis zu einer Kante 6 abisolierte Aderisolierung 7 setzt sich als zylindrischer Körper fort. Noch etwas weiter hinter das Kabelende zurückgenommen ist die äussere Leitschicht 9 dargestellt. Die zurückgebogenen und mit einem Dichtmittel versehenen Enden der Schirmdrähte 3 der Kabelabschirmung 4 bilden eine Stufe 11. Nicht dargestellt ist der ebenfalls stufenförmige Übergang zur äusseren Kabelisolierung.

Das radial dehnbare hülsenförmige Bauteil 8, das zu einem Kabelgarnitur-Set gehört und z.B. aus Silikongummi oder EPDM besteht, soll auf das Kabelende aufgeschoben werden. Dabei müssen sowohl die Kante 6 der Aderisolierung 7 als auch die Stufe 11 der Schirmdrähte 3 überwunden werden, die beide einen Aussendurchmesser haben, der grösser ist als der Innendurchmessser des hülsenförmigen Bauteils 8.

Die Verfahrensweise besteht nun darin, dass zuerst die freien Enden der Gleitzungen 2 der erfindungsgemässen Aufschiebehülse durch das hülsenförmige Bauteil 8 hindurchgeschoben werden. Danach wird das elastisch dehnbare hülsenförmige Bauteil 8 zusammen mit der Aufschiebehülse 1 auf das vorbereitete Kabelende aufgeschoben. Dabei kommen die beispielsweise aus Polyäthylen bestehenden Gleitzungen 2 zwischen dem hülsenförmigen Bauteil 8 und dem Kabelende als Grundkörper 10 zu liegen und ordnen sich dort ohne einander zu überlappen an; sie erleichtern wegen ihrer Gleiteigenschaften das Aufschieben des hülsenförmigen Bauteils auf die ebenfalls aus Polyäthylen bestehende Kabelisolierung, denn Polyäthylen rutscht auf Polyäthylen sehr gut. Durch diese Verfahrensweise kann mittels der Aufschiebehülse auch ohne weiteres die Kante 6 und die Stufe 11 überwunden werden, indem die Gleitzungen 2 geschmeidig darüber hinweggleiten. Von entscheidendem Vorteil ist, dass dabei jegliche Gefahr von Beschädigungen der Innenfläche des hülsenförmigen Bauteils 8 etwa durch die Schirmdrähte 3 an der Stufe 11 vermieden wird.

Das hülsenförmige Bauteil 8 kann nun beliebig positioniert werden, wozu am Grundkörper 10 als Hilfe auch eine Markierung vorgesehen werden kann. Das in Fig. 1b dargestellte Beispiel eines Feldsteuerungselementes in Form des hülsenförmigen Bauteils 8 befindet sich in der Endposition über der Absetzkante 12 der äusseren Leitschicht 9. Danach werden die biegsamen Gleitzungen 2 der Aufschiebehülse nacheinander in Richtung der Querlasche 1 aus dem Zwischenraum zwischen dem Bauteil 8 und der Kabelader herausgezogen, und das Bauteil 8 kann sich dichtend und isolierend in richtiger Position die Kabelgarnitur umschliessen. Die Aufschiebehülse wird danach entfernt und kann zum Aufschieben weiterer Bauteile, z.B. von Isolierschirmen aus Silikongummi, weiterverwendet werden.

Die erfindungsgemässe Verfahrensweise mittels der Aufschiebehülse erleichtert das Aufschieben von hülsenförmigen Bauteilen auf zylindrische Grundkörper wesentlich, so dass im allgemeinen auf die Verwendung üblicher viskoser Gleitmittel verzichtet werden kann. Auch das schliessliche Entfernen der Gleitzungen 2 aus dem Zwischenraum zwischen dem Grundkörper 10 und dem hülsenförmigen Bauteil 8 kann ohne nennenswerte Kraftanstrengung erfolgen.

Die neue Verfahrensweise ist unabhängig an jeden Anwendungsfall anzupassen. Sollte der Durchmesser des Grundkörpers so gering sein, dass sich die Gleitzungen 2 zwischen dem ausgewählten hülsenförmigen Bauteils 8 und dem Grundkörper 10 beim Aufschieben überlappen können, so kann dadurch vermieden werden, dass eine oder mehrere der Laschen 2 nicht mit in das hülsenförmige Bauteil 8 eingeführt werden.

Sollten andererseits besonders grosse Durchmesser von Grundkörpern 10 mit einem hülsenförmigen Bauteil zu umschliessen sein, und es steht eine ausreichend bemessene Aufschiebehülse 1 nicht zur Verfügung, so kann eine Ausbildung gemäss Fig. 2 zur Anwendung kommen oder es kann eine Aufschiebehülse gemäss Fig. la mit einer ringförmigen Querlasche 1 aufgeschnitten werden. In beiden Fällen lässt sich dann die Aufschiebehülse auch bei grossen Durchmessern anwenden und das Verfahren durchführen.

Ausserdem umfasst das erfindungsgemässe Verfahren auch eine Ausbildung, bei welcher eine Aufschiebehülse in der in Fig. 3 dargestellten Ausführung verwendet wird, bei der die Ausführung gemäss Fig. 2 quasi spiegelbildlich ausgebildet ist. Je eine Querlasche 1, 21 ist an beiden Enden der Gleitzungen 2 mit diesen verbunden. Etwa auf halber Länge weisen die Gleitzungen 2 eine Sollbruchstelle 22 auf. Die eine Querlasche 1 kann soweit zu einem runden Gebilde geformt werden, dass ein hülsenförmiges Bauteil 8 aufgeschoben werden kann. Diese Ausführungsform empfiehlt sich bei besonders langen Grundkörpern 10 und hülsenförmigen Bauteilen 8, wenn deren Anpressdruck sehr gross ist, so dass das Aufschieben behindert werden könnte. In einem solchen Fall kann eine zusätzliche Stützung der Gleitzungen 2 von Vorteil sein. Nach dem Positionieren dieser Aufschiebehülse zusammen mit dem hülsenförmigen Bauteil 8 über dem Grundkörper 10, wird die Aufschiebehülse nach beiden Seiten herausgezogen, wobei sich die Gleitzungen 2 an ihren dafür vorgesehenen Sollbruchstellen 22 leicht voneinander trennen.

Das erfindungsgemässe Aufschiebeverfahren mit der Aufschiebehülse als Vorrichtung wurde beispielhaft in dem Anwendungsbereich der Kabelverbindungstechnik beschrieben, ohne auf diesen beschränkt zu sein; das Verfahren ist bei allen Aufgaben anwendbar, bei denen es um das Aufbringen von elastisch dehnbaren Hüllkörpern auf Grundkörper geht, z.B. beim Aufziehen von Dichtungsmanschetten auf zylindrische oder annähernd zylindrische Maschinenteile.

## Patentansprüche

1. Verfahren zum Aufschieben und Positionieren einer hülsenförmigen, radial aufdehnbaren Kabelmuffe (8) aus einem hochelastischen Werkstoff von in entspanntem Zustand kleinerem kreisförmigen Querschnitts-lnnenmass, als das Aussenmass einer etwa zylindrischen oder konischen Kabelverbindung (10) beträgt, mit Hilfe von zwischen der Kabelverbindung (10) und dem Hohlraum der Kabelmuffe (8) eingefügten langgestreckten, dünnen, biegsamen, laschenartigen Gleitzungen (2), auf denen gleitend die sich aufdehnende Kabelmuffe (8) auf die Kabelverbindung (10) aufgeschoben wird, und die nach dem Positionieren entfernt werden,
dadurch gekennzeichnet,
dass die voneinander beabstandet gleichmässig umfangsverteilten Gleitzungen (2) mittels eines diese zusammenfassenden Verbindungselements (1) gemeinsam manuell erfasst, in Aufschleberichtung über die Kabelverbindung (10) geführt und darauf an ihren in entgegengesetzter Richtung freien Enden zu einem Bündel geringeren Durchmessers zusammengedrückt werden, über welches die Kabelmuffe (8) übergestülpt und mit geringem Kraftaufwand auf den Gleitzungen (2) gleitend bis zum Erreichen der End position aufgeschoben wird, in welcher die Kabelmuffe (8) mittels ihrer Schrumpfspannung die Kabelverbindung (10) dichtend umschliesst.

2. Verfahren nach Anspruch 1, dadurch gekennzeichnet, dass die freien Enden der Gleltzungen (2) umfangsverteilt In dem Hohlraum der Kabelmuffe (8) an deren Wandung anliegend und an ihre Enden frei herausragend eingesetzt werden, bevor diese über mit den aufgespreizten, die Kabelverbindung (10) allseitig umfangsverteilt umgebenden Gleitzungen (2) auf diesen gleitend bis zur Endposition aufgeschoben wird, und dass darauf die Gleitzungen (2) in Aufschleberichtung durch Herausziehen entfernt werden.

3. Verfahren nach Anspruch 1 oder 2, dadurch gekennzelchnet, dass die Gleitzungen (2) an wenigstens einer Stelle ihrer Längserstreckung während des Aufschiebens mittels wenigstens einer als Verbindungselement wirkenden, einteiligen Querlasche (1) verbunden sind und dadurch in Ihrer gegenseitigen Beabstandung fixiert werden.

4. Verfahren nach Anspruch 3, dadurch gekennzeichnet, dass wenigstens eine einteilige Querlasche (1) das Bündel der beabstandeten Gleitzungen (2) wenigstens an deren einem Ende verbindet und gegeneinander fixiert.

5. Vorrichtung zum Aufschieben und Positionieren einer kreisförmigen, radial aufdehnbaren Kabelmuffe (8) aus einem hochelastischen Kunststoff von in entspanntem Zustand kleineren Innenmass als das Aussenmass einer zylindrischen oder konischen Kabelverbindung (10) beträgt, zur Durchführung des Verfahrens nach einem der Patentansprüche 1 bis 4,
gekennzeichnet durch
eine einteilige Aufschiebehülse, bestehend aus einer einen geschlossenen ringförmigen flexiblen Distanz- oder Teilringbund bildenden Querlasche (1) von grösserem Innenmass als das Aussenmass des zu umschliessenden Grundkörpers, mit welcher eine Anzahl von gleichmässig umfangsverteilter, seitlich voneinander gering beabstandeter, langgestreckter, dünner, biegsamer, laschenartiger Gleitzungen (2) aus einem Werkstoff von in Bezug auf den Werkstoff des Grundkörpers hoher Gleitfähigkeit verbunden sind.

6. Vorrichtung nach Anspruch 5, dadurch gekennzeichnet, dass die Gleitzungen (2) eine Breite zwischen 3 und 15 mm und eine Dicke zwischen 0,1 und 4 mm aufweisen.

7. Vorrichtung nach Anspruch 5, dadurch gekennzeichnet, dass sich die Gleitzungen (2), ausgehend von der Querlasche (1) bzw. dem von dieser gebildeten, geschlossenen Ring (24) in ebenem koaxialem Verlauf zu dessen Mittelachse erstrecken und sich aus diesen Verlauf abwinkeln lassen, und zwar in nur einer oder auch in beiden Richtungen.

8. Vorrichtung nach Anspruch 5, dadurch gekennzeichnet, dass die Gleitzungen (2) in einem Abstand von der einen Distanz- oder Teilringbund bildenden Querlasche (1) mittels einer zweiten Querlasche verbunden sind, und dass zwischen der ersten und der zweiten Querlasche bzw. zwischen dem ersten und zweiten geschlossenen Ring Sollbruchstellen bzw. Schwächungsnuten (22) vorhanden sind.

9. Vorrichtung nach einem der Ansprüche 5 bis 8, dadurch gekennzeichnet, dass die Gleitzungen (2) und die Querlaschen (1) aus einem thermoplastischen Kunststoff, vorzugsweise Polyäthylen und/oder Polypropylen bestehen und im Spritzgiessverfahren hergestellt sind.

10. Vorrichtung nach einem der Ansprüche 5 bis 9 dadurch gekennzeichnet, dass die Gleitzungen (2) und die Querlaschen (1) aus einem plattenförmigen oder aus einem als Band extrudierten Kunststoffmaterial, vorzugsweise Polyäthylen oder Polypropylen, durch eine mechanische Bearbeitung, insbesondere durch Stanzen oder Schneiden hergestellt sind.

## Claims

1. Method for sliding and positioning a tube-shaped and radially expandable cable sleeve (8) of highly resilient material and of which the inside dimension of the circular cross-section is, in the relaxed state, smaller than the outside dimension of a nearly cylindrical or tapered cable joint (10) using oblong, thin and flexible strap-type sliders (2), inserted between the cable joint (10) and the hollow of the cable sleeve (8), the expanding cable sleeve (8) is pushed onto the cable joint (10) and moves on the sliders (2) which will be taken off after positioning,
characterized in
that the spaced sliders (2), uniformly spread over the periphery, are jointly taken by hand using a link (1) comprising the latter, moved in slide-on direction over the cable joint (10) and, at their in opposite direction free ends, compressed to form a bunch of a smaller diameter on which the cable sleeve (8) is laid and, moving with slight expenditure of force on the sliders (2), pushed up to the end position where the cable sleeve (8) will tightly enclose the cable joint (10) due to its contraction strain.

2. Method according to claim 1, characterized in that the free ends of the sliders (2) contacting the wall of the cable sleeve (8), duly distributed over the periphery of its hollow, are placed in such a way that they freely project from its ends before that sleeve is pushed to the end position by means of the expanded sliders (2) surrounding the cable joint (10) at all sides and spread over its periphery, moving on these sliders, and further in that the sliders (2), with the sleeve in end position, will be removed by pulling in slide-on direction.

3. Method according to claim 1 or 2, characterized in that at least at any place of their longitudinal extension, the slides (2) are, during the slide-on operation, joined by at least a single one-part cross strap (1) acting as a link, thereby fixing their mutual spacing.

4. Method according to claim 3, characterized in that at least a single one-part cross strap (1) will join and mutually fix the bunch of spaced sliders (2) at least at their either end.

5. Device for sliding and positioning a circular and radially expandable cable sleeve (8) of a highly resilient plastic material having in relaxed state a smaller inside dimension than the outside dimension of a cylindrical or tapered cable joint (10) in order to carry out the method according to one of the claims 1 to 4,
characterized by
a one-part slide-on sleeve comprising a cross strap (1) forming a closed and flexible spacing or partially circular bunch, said strap having a greater clear opening than the external dimension of the basic body to be enclosed and with which a certain number of uniform, laterally somewhat spaced, elongated, thin, resilient strap-type sliders (2) are connected, same consisting of a material showing a higher sliding quality than that of the basic body.

6. Device according to claim 5, characterized in that the sliders (2) have a width between 3 and 15 mm and a thickness between 0, 1 and 4 mm.

7. Device according to claim 5, characterized in that starting from the cross strap (1) or the closed ring (24) formed by the latter, the sliders (Z) extend in a plain coaxial run as referred to its center line and can be bent from this course in one or both directions.

8. Device according to claim 5, characterized in that the sliders (2) have been linked by a second cross strap, viz. at a certain distance from the cross strap (1) forming a spacer or partially circular bunch and further that there are rated break points respectively weakening grooves (22) between the first and the second cross strap respectively between first and second closed ring.

9. Device according to one of the claims 5 to 8,
characterized in
that the sliders (Z) and the cross straps (1), consisting of a thermoplastic material, preferably of polyethylene and/or polypropylene, have been injection-moulded.

10. Device according to one of the claims 5 to 9,
characterized in
that the sliders (2) and the cross straps (1) have been made from plastic sheet or a plastic material extruded as a strip, preferably polyethylene or polypropylene, by machining, especially punching or cutting.

## Revendications

1. Procédé pour glisser et positionner un manchon de câble (8) en forme de douille et radialement extensible, d'une matière hautement élastique et, en état détendu, d'une mesure intérieure de coupe circulaire plus petite que la mesure extérieure d'une jointure de câble (10) quasi cylindrique ou conique, à l'aide des langues de glissement (2) de type éclisse allongées, minces et souples, insérées entre la jointure de câble et le creux du manchon de câble (8), et glissant sur lesquelles, le manchon de câble qui s'étire, se pousse sur la jointure de câble (10), langues enlevées après le positionnement,
caractérisé par ce
que les langues de glissement (2), espacées l'une de l'autre et uniformément distribuées sur la circonférence, se saisissent ensemble à la main, au moyen d'un élément de liaison (1) qui les réunit; se passent sur la jointure de câble (10) en direction d'enfilage et, en cet endroit, leurs bouts libres en direction opposée se pressent tout en formant un faisceau de diamètre réduit sur lequel le manchon de câble (8) 'enfonce et, passant sur les langues de glissement (2) avec faible dépense d'énergie, celui-ci se pousse jusqu'à la position finale où il entoure la jointure de câble (10) tout en la rendant étanche, grâce à sa contrainte de retrait.

2. Procédé selon revendication 1, caractérisé par ce que les bouts libres des langues de glissement (2) s'insèrent, dûment répartis sur la circonférence, dans le creux du manchon de câble (8), soit collant à sa paroi et librement débordant de ses extrémités, avant qu'il ne soit poussé, avec les langues de glissement (2) écartées et entourant la jointure de câble (10) de tous les côtés et réparties sur la circonférence, glissant sur ces langues, jusqu'à sa position finale et, en cet endroit, les langues de glissement (2) s'enlèvent en les tirant en direction d'enfoncement.

3. Procédé selon revendication 1 ou 2, caractérisé par ce que les langues de glissement (2) sont, pendant l'enfilage, reliées à au moins un seul endroit de leur étendue en longueur par au moins une seule éclisse transversale (1) indivisée agissant comme élément de liaison et que leur espacement mutuel est, par cela, dûment fixé.

4. Procédé selon revendication 3, caractérisé par ce qu'au moins une seule éclisse transversale (1) indivisée unit le faisceau de langues de glissement (2) espacées au moins à l'un de leurs deux bouts tout en les fixant l'une contre l'autre,

5. Dispositif pour glisser et positionner un manchon de câble (8) circulaire et radialement extensible d'une matière plastique hautement souple et, en état détendu, d'une mesure intérieure plus petite que la mesure extérieure d'une jointure de câble (10) cylindrique ou conique permettant d'exécuter le procédé selon l'une des revendications 1 à 4,
caractérisé par
une douille d'enfilage indivisée comportant une éclisse transversale (1) formant un faisceau d'espacement ou d'anneau partiel clos et souple dont la mesure intérieure dépasse la mesure extérieure du corps de base à enfermer, éclisse à laquelle un certain nombre de langues de glissement (2) de type éclisse ont été reliées, uniformément réparties sur la circonférence, l'une de l'autre un peu espacée, allongées, minces et souples, ces langues étant fabriquées d'une matière de haute capacité de glissement par rapport à celle du corps de base.

6. Dispositif selon revendication 5, caractérisé par ce que les langues de glissement (2) présentent une largeur entre 3 et 15 mm et une épaisseur entre 0, 1 et 4 mm.

7. Dispositif selon revendication 5, caractérisé par ce que partant de l'éclisse transversale (1) respectivement de l'anneau fermé (24) constitué de cette dernière, les langues de glissement (2) s'étendent en allure plane et coaxiale à l'axe central de cet anneau et peuvent être pliées de cette allure, soit dans une seule ou dans les deux directions.

8. Dispositif selon revendication 5, caractérisé par ce qu'à une certaine distance de l'éclisse transversale (1) formant un faisceau d'espacement ou d'anneau partiel, les langues de glissement (Z) ont été jointes à une deuxième éclisse transversale et qu'entre la première et la deuxième éclisses respectivement entre le premier et le deuxième anneaux, il existe des points destinés à la rupture ou des rainures d'affaiblissement (22).

9. Dispositif selon une des revendications 5 à 8,
caractérisé par ce
que les langues de glissement (2) et les éclisses transversales (1) ont été fabriquées en matière thermoplastique, préférablement polythène et/ou polypropylène, en utilisant le procédé de moulage par transfert.

10. Dispositif selon une des revendications 5 à 9,
caractérisé par ce
que les langues de glissement (Z) et les éclisses transversales (1) ont été fabriquées d'une matière plastique en forme de panneau ou extrudée en bande, préférablement polythène ou polypropylène, par usinage, surtout par estampage ou découpage.
